# EUROPEAN PATENT APPLICATION

(11) **EP 4 607 737 A1**
(43) Date of publication of application: **27.08.2025**
(21) Application number: 24159296.3
(22) Date of filing: 23.02.2024
(51) Int. Cl.: H02J 3/38, H02J 3/48

(54) **METHOD FOR CONTROLLING A WIND POWER PLANT, COMPUTER PROGRAM PRODUCT AND WIND POWER PLANT**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

A method for controlling a wind power plant (1), the wind power plant (1) comprising one or more generator devices (14) and a grid-forming component (5) electrically connected to an output terminal (17) of the one or more generator devices (14), the wind power plant (1) including an electrical grid and/or being electrically connected to an electrical grid (4), and the method comprising:
a) determining (S4) a frequency deviation (ΔF) of a current frequency (F_{C}) of the respective electrical grid (4) from a nominal frequency (F_{N}),
c) controlling (S7) the power flow in the wind power plant (1) and grid-forming component (5) based on the determined frequency deviation (ΔF) and a droop characteristic (27, 28) of the grid-forming component (5) relating on a current power output (PG_{C}) of the one or more generator devices (14).

Thus, frequency regulation of the grid can be improved.

## Description

The present invention relates to a method for controlling a wind power plant, a computer program product and a wind power plant.

Mechanical components of wind turbines are subject to oscillations during operation of the wind turbine. For example, tower oscillations may occur. Further, a drive train of the wind turbine including a gearbox and/or one or more bearings and other mechanical components may be excited to perform oscillations during operation of the wind turbine. These mechanical oscillations may cause wear or even damage of the respective components.

In WO 2021/028198 A1, active damping control is proposed to stabilize tower oscillations or drive train oscillations and, thus, to reduce loads on the components of a wind turbine. The proposed active damping control may include a measurement of tower acceleration, nacelle acceleration and/or rotational speed of one or more components of the drive train. Further, based on such measurements, a damping control signal is generated (e.g., sinusoidal offsets) which is added to a power or torque reference supplied to the generator system to control the generator system. Hence, the damping control in WO 2021/ 028198 A1 causes a damping-related power output variation at an output terminal of the generator system.

In US 2014/0316592 A1 a power plant controller is described controlling a power generation system having one or more power generators and an energy storage system, and where it provides a utility grid or transmission system operator with the capability to select the droop response provided by the power generation system. Accordingly, an operator can request a specific generator droop response in order to provide appropriate frequency and grid control services. The power plant controller operates in real time determining one or more power characteristics of the power generation system.

It is one object of the present invention to provide an improved method for controlling a wind power plant and an improved wind power plant.

This especially is the case when the wind power plant is in islanding condition, or for a microgrid. In the present context microgrid relates to any grid of a size where the power is sufficiently small to be affected by e.g. oscillations of a single generator devices, such as a single wind turbine.

If further relates to the control mechanical oscillations of the one or more mechanical structures of the one or more wind turbine installation.

Accordingly, a method for controlling a wind power plant is provided. The wind power plant comprises one or more generator devices and a grid-forming component electrically connected to an output terminal of the one or more generator devices. Furthermore, the wind power plant includes an electrical grid and/or is electrically connected to an electrical grid. The method comprises:
a) determining a frequency deviation of a current frequency of the respective electrical grid from a nominal frequency,
c) controlling the power flow in the wind power plant and grid-forming component based on the determined frequency deviation and a droop characteristic of the grid-forming component.

In the present context, controlling power flow the wind power plant and grid-forming component is seen as a control of power flow of power generated by the generator devices and possible stored in the grid-forming component in a grid electrically connecting at least one generator device and the grid-forming component. For a wind power plant including plural generator devices the grid may all include all electrical connections between the generator devices in addition to the electrical connections of the generator devices to the grid-forming component.

The method e.g. may be especially relevant for systems with multiple generator devices (such as for wind parks including a plural of wind turbines) in islanding situations. This refers to when the multiple generator devices are being electrically isolated from an electrical main grid, or utility grid, either permanently or temporarily, but where they continue to generate power.

Some designs, commonly known as a microgrid, allow for intentional islanding. In case of a power outage, a microgrid controller disconnects the local circuit from the grid on a dedicated switch and forces the distributed generator(s) to power the entire local load.

In the present context microgrid in general relates to any grid of a size where the power is sufficiently small to be affected by e.g. oscillations of a single generator devices, such as a single wind turbine. This could be where a limited number of wind turbines are connected to a limited number of loads, e.g. during islanding or for production plants for example for producing Hydrogen.

Without a frequency control, the balance between a load and generation in an islanded circuit, or microgrid, can be violated, thereby leading to abnormal frequencies and voltages.

Further, in such situations each generator (respectively wind turbine) offers a substantial fraction of the combined generated power, and large oscillations of one turbine therefore is not evened out as in the electrical main, or utility, grid, where it would offer an insignificant part of the total power.

In one embodiment, the method includes controlling the power output of the grid-forming component via the grid-forming component droop characteristic to reduce the frequency deviation.

The power flows thus can be controlled to respectively store power or extract the required power at frequencies and voltage/current levels(amplitudes) needed to counter the frequencies (or undesired oscillations).

The method thus includes using the grid forming component to smooth out the oscillations letting it absorb the individual oscillations from the generator devices and to feed it feed power into the system when needed.

The method may in an embodiment also include not to control according to droop characteristics of the generator devices, but the droop characteristic of the grid-forming component.

In this embodiment the grid-forming component droop characteristic thus replaces the generator device droop characteristic, or the generator device droop characteristics of the individual generator devices in case of more than one. The corrections to frequency deviations then are being done via the grid-forming component. This is especially relevant in islanding and/or microgrid situations.

Thus, in this embodiment in e.g. islanding or a microgrid mode, rather than operating the individual generator devices usually according to their respective own droop characteristics as in normal mode, the control is done based on the droop characteristic of the grid-forming element, thus only one shared droop characteristic.

The present invention therefore may offer the possibility to shift to operate according to the method of any of embodiments.

The method according to this embodiment thus includes two modes,
- a normal mode of operation where at least some of a plural of generator devices are operated according to a generator device droop characteristics individual to the respective generator devices, and/or the grid-forming component are used to control the power supplied to an electrical grid, and
- an islanding control mode if the wind power plant is in an islanding or microgrid condition, to a operate according to the grid-forming component droop characteristic according to the method of the embodiments.

Thus, during islanding situations. for example, for temporary islanding situations, a controller (e.g. wind farm controller, microgrid controller, a dedicated wind turbine controller etc.) may change from a normal operation mode to an islanding control mode where it operates according to any of the embodiments of the present invention.

The method may include a step b) (between steps a) and c)) to determining (S6) a droop characteristic for the grid-forming component based on a current power output (PG_{C}) of the one or more generator devices such that for a larger power output (PG_{C}) a droop characteristic) with a larger gradient is applied.

By determining the frequency deviation of the current frequency from the nominal frequency of an islanded electrical grid formed by the wind power plant or of an external electrical grid to which the wind power plant is connected, the presence of a frequency event of the respective electrical grid can be detected.

Further, by controlling the power output of the grid-forming component of the wind power plant based on the determined frequency deviation, the frequency of the respective electrical grid can be regulated. For example, the power output of the grid-forming component can be controlled such that additional electrical power is supplied to the grid in a low-frequency event and such that electrical power is extracted from the electrical grid in a high-frequency event.

Moreover, the power output of the grid-forming component is controlled - in addition to the frequency deviation of the grid - also based on a specially determined droop characteristic. In particular, the droop characteristic is determined dependent on the current power output of the one or more generator devices (e.g., based on a wind condition at the wind harvesting site). Thus, the frequency regulation can be adjusted to the generated power of the wind power plant. For example, a speed with which the frequency of the electrical grid is regulated by the grid-forming component can be adjusted to the generated power of the generator devices of the wind power plant.

By applying a droop characteristic with a larger gradient (i.e. a steeper droop curve), a frequency event of the respective grid can be regulated faster when the power output of the generator devices is high.

Likewise, by applying a droop characteristic with a smaller gradient (i.e., a less steep droop curve), a frequency event of the respective grid is regulated slower when a power output of the generator devices is low.

By determining (e.g., selecting) a droop characteristic for the grid-forming component which allows a fast regulation of the grid frequency, interference of the frequency regulation with other (electrical or mechanical) functions of the wind power plant can be minimized and/or avoided. Further, interference with other (electrical or mechanical) functions of the wind power plant may have a particularly negative impact during phases of high power output of the one or more generator devices of the wind power plant.

On the other hand, by determining (e.g., selecting) a droop characteristic for the grid-forming component which allows a slow regulation of the grid frequency, wear of the grid-forming component can be reduced and/or its lifetime increased.

For example, during a phase of high power output of the one or more generator devices of the wind power plant, a fast regulation of the grid frequency may be advantageous. In particular, during a phase of high power output of the one or more generator devices (e.g., during high wind), mechanical oscillations of mechanical structures (e.g., tower, drive train) of wind turbine installations of the wind power plant may be significant. Hence, during such a phase, active oscillation damping of mechanical oscillations may be needed, as described, for example, in WO 2021/028198 A1. Such active damping control stabilizes tower oscillations and/or drive train oscillations by adding a varying offset (e.g., sinusoidal offset) to a power or torque reference supplied to the one or more generator devices to control the one or more generator devices. This causes a damping-related power output variation at the output terminal of the one or more generator devices. In order to minimize an interference of the mechanical oscillation damping and the frequency regulation, a fast frequency regulation is of advantage.

The wind power plant includes, for example, one or more wind turbine installations. A wind turbine installation is an apparatus to convert the wind's kinetic energy into electrical energy (electrical power). The wind turbine installation comprises, for example, a rotor having one or more blades connected each to a hub, a nacelle including the generator device, and a tower holding, at its top end, the nacelle. The tower of the wind turbine may be connected via a transition piece to a foundation of the wind turbine, such as a concrete foundation or a monopile in the seabed.

The one or blades may, for example, be rotatably connected to the hub by a pitch bearing for adjusting a pitch angle of the one or more blades.

The rotor hub is mechanically connected to a rotating shaft (e.g., a main shaft) supported by one or more bearings inside the nacelle. The main shaft may be directly coupled to the generator device for generating electric power. Alternatively, the wind turbine installation may comprise a gear box for transforming the rotation of the main shaft to a rotation of a secondary shaft which is then coupled to the generator device.

The generator device includes an electrical generator for generating electric power, such as a permanent magnet synchronous machine. The generator device further includes, for example, a converter for converting a variable frequency power stream delivered by the generator to a substantially fixed frequency power stream at the output terminal of the generator device.

The wind power plant is, for example, an onshore wind power plant with onshore wind turbine installations. The wind power plant may, however, also be an offshore wind power plant with offshore wind turbine installations. Offshore includes marine environments as well as lakes and other open waters.

The wind power plant forms, for example, an islanded electrical grid and/or microgrid. The islanded grid and/or microgrid may be an off-grid system which is not connected to an external grid. The islanded grid and/or microgrid may also be a system electrically connected to an (e.g., very weak) external grid. In case that the wind power plant forms an islanded electrical grid and/or microgrid, the method allows a regulation of the frequency of this islanded electrical grid and/or microgrid.

Alternatively, the wind power plant is electrically connected to an external electrical grid (also referred to as the main grid or utility grid) and the method allows a regulation of the frequency of this external electrical grid. The external electrical grid is, for example, an interconnected network for electricity delivery from producers to consumers. The external electrical grid is, for example, a nation-wide electrical grid.

The frequency of the respective electrical grid (also called utility frequency) is the frequency of oscillations of alternating current (AC) of the electrical grid. Usually, the current is transmitted through the grid with a synchronized frequency from generators of the grid to the end-user. In large parts of the world including Europe, the nominal frequency of the electrical grid is 50 Hz. In USA and parts of Asia, the nominal frequency of the electrical grid is 60 Hz.

Operation of an electrical grid (islanded grid or large nation-wide grid) at nearly constant frequency is important for the power generators of the grid to remain synchronized. When the amount of electricity consumed from the grid changes, generator output to the grid must be controlled to follow the load. For instance, if the load increases faster than a turbine generator can respond, the generator slows down, momentarily operating at lower frequency. If the load changes are severe, other generators of the grid may not remain synchronized and a widespread power outage may occur.

Adjusting the power generation of a wind power plant is a slow process. Advantageously, the grid-forming component is used to decrease or increase the load on the respective grid. Hence, by applying the grid-forming component, a faster regulation of the grid frequency can be provided.

The nominal frequency of the grid is, for example, 50 Hz or 60 Hz.

The droop characteristic is, in particular, a droop curve. The droop characteristic is, for example, a (e.g., linear) function of the grid frequency.

The grid-forming component is, in particular, a unit capable of feeding electric power into the grid. The grid-forming component is, for example, a unit capable of decreasing or increasing a load of the grid.

The grid-forming component is, for example, arranged remote from the wind turbine installations of the plant. Alternatively, the grid-forming component may, for example, also be arranged in a tower of one of the (e.g., multiple) wind turbine installations of the plant.

In case of a wind power plant comprising more than one wind turbine installation and/or more than one generator device, only a single grid-forming component may be provided in the plant, the single grid-forming component being electrically connected to the output terminals of all generator devices of the plant.

Step c) may include generating a control signal based on the determined frequency deviation and a determined droop characteristic and performing control based on the determined control signal. Further, step c) may include a feedback control and/or a closed loop control of the grid forming component (e.g., of discharging and charging the grid forming component).

In embodiments, the method may include a step of determining and/or estimating the current power output of the one or more generator devices based on secondary parameters. Such secondary parameters may include a wind speed at the one or more wind turbine installations and/or other environmental conditions (e.g., icy rotor blades) influencing the power generation of the wind turbine installations.

According to an embodiment, the grid-forming component includes an energy storage device.

The energy storage device is, for example, a battery energy storage device (BESS), a supercapacitor or other suitable energy storage means.

The energy storage device is, for example, discharged for regulating a low-frequency event and recharged for regulating a high-frequency event of the grid.

A storage capacity of the energy storage device depends on the size of the wind turbine - or in case of multiple wind turbines on the number and size of the multiple wind turbines.

For example, energy capacity ratings range from 0.5 MWh to 20 MWh and power ratings range from 0.5 MW to 50 MW.

According to a further embodiment, the wind power plant comprises one or more wind turbine installations each comprising one of the generator devices. Further, the method comprises a step of receiving a value of a signal that represents a current operating point of the one or more wind turbine installations. Moreover, the current power output of the one or more generator devices is determined based on the received value.

The current operating point of the one or more wind turbine installations includes, for example, a wind speed at the one or more wind turbine installations.

According to a further embodiment, the wind power plant comprises one or more wind turbine installations including one or more mechanical structures. In addition, the method may be used for active oscillation damping of mechanical oscillations of the one or more mechanical structures of the one or more wind turbine installations.

Thus, large mechanical oscillations of mechanical structures such as towers or drive trains of the one or more wind turbine installations can be avoided. Hence, wear or even damage of such structures can be avoided.

According to a further embodiment, the active oscillation damping includes:
receiving oscillation data of mechanical oscillations of the one or more mechanical structures of the one or more wind turbine installations,
generating a damping control signal based on the received oscillation data for the one or more wind turbine installations, and
performing damping control of the one or more generator devices of the one or more wind turbine installations based on the damping control signal causing damping related power output variation at the output terminal of the one or more generator devices.

For example, oscillation data are received for each wind turbine installation. Further, a separate control signal may, for example, be generated for each wind turbine installation. Furthermore, damping control may be performed separately for the generator device of each wind turbine installation.

The droop characteristic may define the dependency of a desired power output of the grid-forming component on the frequency of the respective electrical grid.

In particular, the droop characteristic defines the dependency of the desired power output of the grid-forming component on the frequency deviation of the respective electrical grid from the nominal frequency.

The droop characteristic may be determined by selecting one droop characteristic from a group of predetermined droop characteristics based on the current power output of the one or more generator devices.

For example, different droop characteristics (e.g., different droop curves) may be predetermined for different power generation conditions (e.g., different wind conditions).

According to a further embodiment, the method comprises a step of determining if a percentage of the current power output to a rated power output of the one or more generator devices or of at least one of the one or more generator devices is above a predetermined threshold. Further, step and c) (possible succeeding the possible steps b)) are carried out if it is determined that the percentage of the current power output to the rated power output of the one or more generator devices is above the predetermined threshold.

It may be such that step b) are carried out if it is determined that the percentage of the current power output to the rated power output of a given, or predefined, number of generator devices is above the predetermined threshold, such as more than 50%.

Thus, determining a tailored droop characteristic for the grid-forming component based on the current power output of the one or more generator devices can be triggered in the case of high power generation (e.g., high wind conditions).

The predetermined threshold is, for example, 40% or more, 50% or more, 60% or more and/or 70% or more.

Further, if it is determined that said percentage of the current power output to the rated power output of the one or more generator devices or the at least one of the one or more generator devices is below the predetermined threshold, steps b) and c) are not carried out. Rather, the power output of the grid-forming component is controlled based on the frequency deviation determined in step a) and a default droop characteristic of the grid-forming component.

The method may comprise:
receiving current frequency data of the respective electrical grid, the frequency data including frequency oscillations in a first frequency range, and
providing a second frequency range corresponding to a damping frequency range used for damping mechanical oscillations of one or more mechanical structures of one or more wind turbine installations of the wind power plant. Furthermore, steps b) and c) are carried out if it is determined that the first frequency range overlaps at least partially with the second frequency range.

Thus, if it is determined that the frequency range of frequency oscillations of the grid (the first frequency range) overlaps at least partially with a frequency range needed for damping control for damping mechanical oscillations of mechanical structures (the second frequency range), the droop characteristic of the grid-forming component can be adjusted. For example, the droop characteristic of the grid-forming component can be adjusted such that a frequency event of the electrical grid is regulated faster in case of overlapping frequency ranges.

The method may include, for example, determining a frequency range (the first frequency range) of frequency oscillations in the received frequency data.

Method according to any of the embodiments may be used on a wind power plant forming an islanded electrical grid and/or microgrid.

According to a further aspect, a computer program product is provided. The computer program product comprises a program code for executing the above-described method for controlling a wind power plant when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a further aspect, a wind power plant is provided. The wind power plant includes an electrical grid and/or is configured for electrical connection with an electrical grid. Further, the wind power plant comprises:
one or more generator devices,
a grid-forming component electrically connected to an output terminal of the one or more generator devices, and one or more control units configured for
   determining a frequency deviation of a current frequency of the respective electrical grid from a nominal frequency, and
   controlling the power flow in the wind power plant and grid-forming component based on a frequency deviation and the determined droop characteristic of the grid-forming component relating on a current power output of the one or more generator devices.

The method may include upon
determining a frequency deviation of a current frequency of the respective electrical grid from a nominal frequency, to be
determining a droop characteristic for the grid-forming component based on a current power output of the one or more generator devices such that for a larger power output a droop characteristic with a larger gradient is applied, and
controlling a power output of the grid-forming component based on the determined frequency deviation and the determined droop characteristic.

The respective entity, e.g., the control unit(s), may be implemented in hardware and/or in software. If said entity is implemented in hardware, it may be embodied as a device, e.g., as a computer or as a processor or as a part of a system, e.g., a computer system. If said entity is implemented in software it may be embodied as a computer program product, as a function, as a routine, as a program code or as an executable object.

The embodiments and features described with reference to the method of the present invention apply mutatis mutandis to the wind power plant of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind power plant according to an embodiment;
Fig. 2 shows a wind power plant according to a further embodiment;
Fig. 3 shows an enlarged partial view of the wind power plant of Fig. 1 or 2, wherein a wind turbine installation and a grid-forming component according to an embodiment are displayed;
Fig. 4 illustrates a current power output of a generator device of the wind turbine installation of Fig. 3 according to an embodiment;
Fig. 5 illustrates frequency ranges used for frequency regulation of an electrical grid and for active damping of mechanical oscillations of mechanical structures of the wind turbine installation of Fig. 3 according to an embodiment;
Fig. 6 shows a droop characteristic for controlling the grid-forming component of Fig. 3 according to an embodiment; and
Fig. 7 shows a flowchart illustrating a number of steps that may be included in a method for controlling the wind power plant of Fig. 1 or 2 according to an embodiment.

In the Figures, like reference numerals designate like or functionally equivalent elements, unless otherwise indicated.

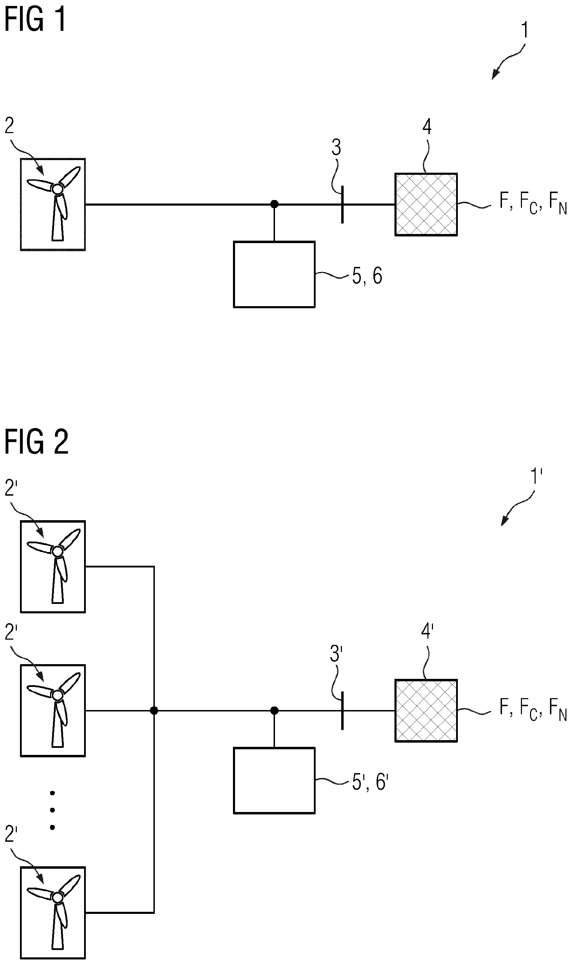

Fig. 1 shows a wind turbine plant 1 with at least one wind turbine installation 2. As shown in Fig. 2, a wind turbine plant 1' may also comprise multiple electrically interconnected wind turbine installations 2'.

The wind turbine plant 1, 1' (Figs. 1, 2) is electrically connected at a connection member 3, 3' (point of common contact, PCC) of the plant 1, 1' to an electrical grid 4, 4'.

The wind turbine plant 1, 1' comprises a grid-forming component 5, 5' for frequency regulation of the electrical grid 4, 4'. In particular, the grid-forming component 5, 5' is used for regulating a frequency F of the grid 4, 4' in case that a current grid frequency F_{C} deviates (e.g., significantly) from a nominal frequency F_{N} of the grid 4, 4' (e.g., 50 Hz).

The grid-forming component 5, 5' includes, for example, an energy storage device 6, 6' which can be discharged in a low-frequency event of the grid 4, 4' and can be recharged in a high-frequency event of the grid 4, 4'.

Although in the following description, the grid-forming component 5, 5' is used to regulate the external grid 4, 4', in other examples, the wind power plant 1, 1' may also form an islanded grid and the grid-forming component 5, 5' may be used to regulate a frequency of the islanded grid.

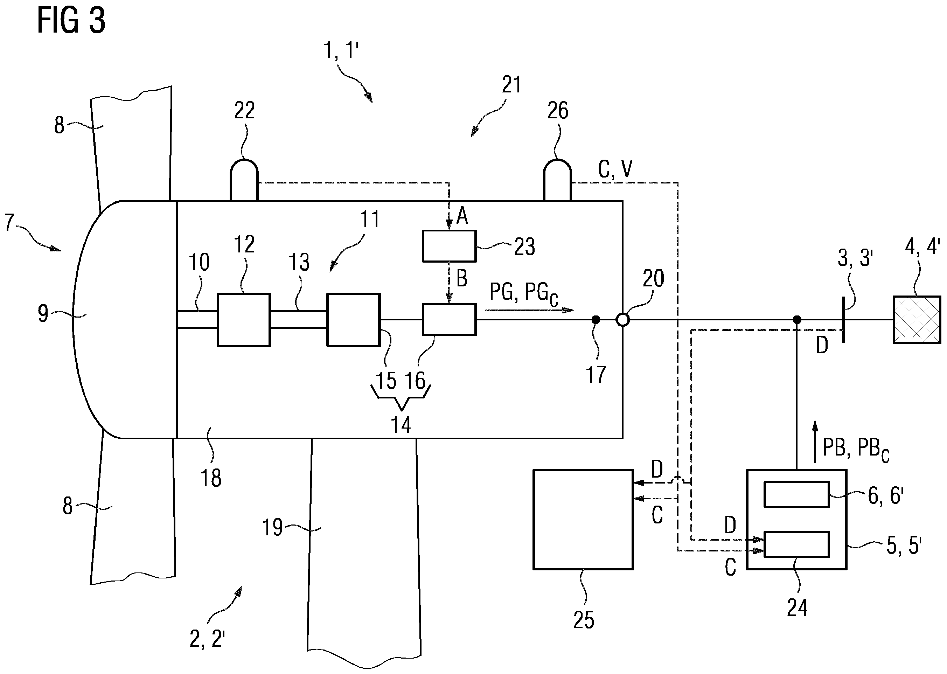

Fig. 3 shows a detailed view of the wind power plant 1, 1'. In particular, in Fig. 3 a detailed view of one of the wind turbine installations 2, 2' is displayed.

As shown in Fig. 3, each wind turbine installation 2, 2' includes a rotor 7 having one or more blades 8 mechanically connected to a hub 9. The rotor hub 9 is mechanically connected to a rotating shaft 10 (e.g., main shaft 10). A drive train 11 of the wind turbine installation 2, 2' may optionally include a gear box 12 for transforming a rotation of the main shaft 10 to a rotation of a secondary rotating shaft 13. The rotating shafts 10, 13 are supported by one or more bearings (not shown). Furthermore, the wind turbine installation 2, 2' includes a generator device 14 with an electrical generator 15 for generating electrical power. The generator device 14 may optionally include a converter 16 for converting a variable frequency power stream delivered by the generator 15 to a substantially fixed frequency power stream at an output terminal 17 of the generator device 14 (e.g., an output terminal 17 of the converter 16). Thus, a generated power PG is provided at the output terminal 17 of the generator device 14, in particular at an output terminal 20 of the wind turbine installation 2, 2'.

As shown in Fig. 3, the wind turbine installation 2, 2' comprises a nacelle 18 accommodating the components 10, 12 - 16 of the drive train 11. The nacelle 18 is (e.g., rotatably) mounted at the upper end of a tower 19.

Each wind turbine installation 2, 2' may further comprise an active oscillation damping system 21 for damping mechanical oscillations of mechanical structures of the wind turbine installation 2, 2' such as the tower 19, the drive train 11 and/or components 10, 12 - 16 of the drive train 11. The active oscillation damping system 21 includes one or more sensors 22 (e.g., accelerometers) for obtaining oscillation data A of mechanical structures 10 - 16, 19 of the wind turbine installation 2, 2'. Further, the active oscillation damping system 21 includes a damping control unit 23 for receiving and processing the oscillation data A. The damping control unit 23 is further configured for generating a damping control signal B based on the processed oscillation data A and for sending the damping control signal B to the generator device 14, e.g., to the converter 16 of the generator device 14. The control of the generator device 14, e.g., the converter 16, based on the damping control signal B causes a variation of the power output PG at the output terminal 17. It is referred to the document WO 2021/028198 A1 for further details on the active oscillation damping system 21 and its application.

Further shown in Fig. 3 is the grid-forming component 5, 5' for frequency regulation of the grid 4, 4'. The grid-forming component 5, 5' is electrically connected to the output terminal 17 of the one or more generator devices 14 of the one or more wind turbine installations 2, 2'. The grid-forming component 5, 5' includes the energy storage device 6, 6' and an energy storage control unit 24 for controlling a power output PB of the energy storage device 6, 6'.

Also shown in Fig. 3 is a main control unit 25 of the wind power plant 1, 1'.

The grid-forming component 5, 5' and the main control unit 25 are shown in Fig. 3 only with respect to their functional connection (e.g., electrical connection and/or data transfer connection) with the wind turbine installation 2, 2' and the grid 4, 4'. Their physical location is not visible in the figures.

The grid-forming component 5, 5' and/or the main control unit 25 may, for example, be arranged in the tower 19 of one of the wind turbine installations 2, 2'. Alternatively, the grid-forming component 5, 5' and/or the main control unit 25 may also, for example, be arranged remote from the (e.g., multiple) wind turbine installations 2, 2'.

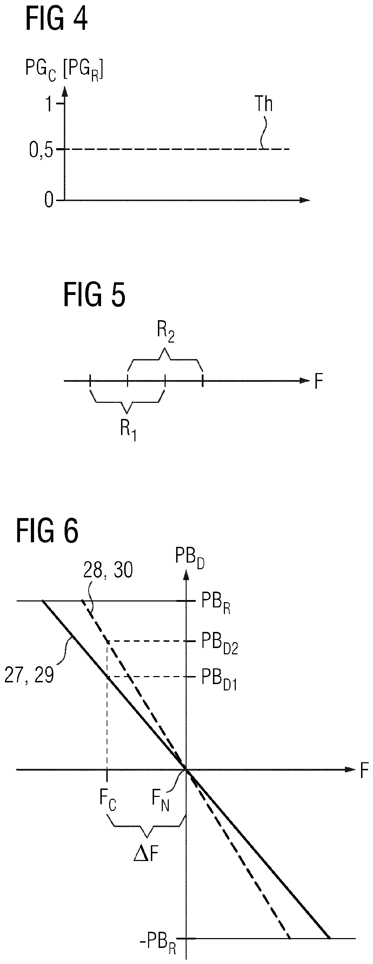

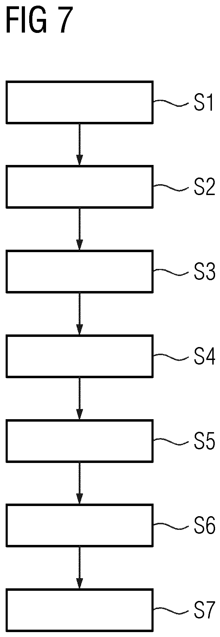

In the following, a number of steps is described with reference to Figs. 4 to 7, that all could be included in a method for controlling a wind power plant 1, 1'.

In a first step S1 of the method, a current power output PG_{C} (Fig. 3) of the one or more generator devices 14 is determined.

In case of a wind power plant 1' (Fig. 2) with multiple wind turbine installations 2' and, hence, multiple generator devices 14 (Fig. 3), the current power output PG_{C} of each of the multiple generator devices 14 may be (e.g., separately) determined in step S1.

The current power output PG_{C} of the one or more generator devices 14 is, for example, determined by the main control unit 25 of the plant 1, 1'. Alternatively, the current power output PG_{C} of the one or more generator devices 14 may, for example, be determined by the energy storage control unit 24 of the grid-forming component 6, 6'.

Exemplarily, each wind turbine installation 2, 2' may comprise one or more wind sensors 26 (Fig. 3) for obtaining wind data C (e.g., a wind speed V) at the respective wind turbine installation 2, 2'. The main control unit 25 and/or the energy storage control unit 24 may receive the obtained value of the current wind speed V and determined the current power output PG_{C} of (e.g., each of) the one or more generator devices 14 based on the received value of the current wind speed V.

In a second step S2 of the method, it is determined if a percentage of the current power output PG_{C} to a rated power output PG_{R} of (e.g., at least one of) the one or more generator devices 14 is above a predetermined threshold Th, as illustrated in Fig. 4. The predetermined threshold Th is, for example, 50%. However, the predetermined threshold Th may also have other values than 50%.

In an optional third step S3 of the method, an active oscillation damping of mechanical structures 10 - 16, 19 of the wind turbine installations 2, 2' may be carried out. Step S3 may, for example, only be carried out when it is determined in step S2 that the current power output PG_{C} of at least one of the one or more generator devices 14 is above the predetermined threshold Th. For smaller power outputs PG_{C} below the threshold Th, mechanical oscillations of the mechanical structures 10 - 16, 19 of the wind turbine installations 2, 2' may be small enough such that an active oscillation damping is not necessary.

In one embodiment step S3 is carried out when it is determined in step S2 that the current power output PG_{C} of a given, or predefined, number of generator devices 14 is above the predetermined threshold Th. This could for example be the majority corresponding to at least or more than 50% of the generator devices 14 is above the predetermined threshold Th.

In a fourth step S4 of the method, a frequency event of the electrical grid 4, 4' is detected. In particular, a deviation ΔF (Fig. 6) between the current frequency F_{C} of the electrical grid 4, 4' and the nominal frequency F_{N} of the electrical grid 4, 4' is determined.

For example, in step S4, frequency data D (Fig. 3) of the electrical grid 4, 4' including the current frequency F_{C} is received for example by the main control unit 25 or by the energy storage control unit 24. Further, the received frequency data D are analyzed with respect to the presence of a frequency event. In case that a frequency event is detected, the frequency deviation ΔF of the event is determined.

In an optional fifth step S5 of the method, a frequency range R₁ (first frequency range R₁) of frequency oscillations included in the frequency data D is determined, see Fig. 5.

Further, a second frequency range R₂ is provided (e.g., determined) in step S5. The second frequency range R₂ corresponds to a damping frequency range used for damping mechanical oscillations of mechanical structures 10 - 16, 19 of the wind turbine installations 2, 2' in step S3.

Furthermore, it is determined in step S5 if the first frequency range R₁ overlaps at least partially with the second frequency range R₂.

In a sixth step S6 of the method, a droop characteristic 27, 28 (Fig. 6) for the grid-forming component 5, 5' may be determined based on the determined current power output PG_{C} of the one or more generator devices 14.

In a seventh step S7 of the method, the power flow in the wind power plant 1 and grid-forming component 5, 5', including power output PB of the grid-forming component 5, 5' and/or power input, is controlled based on the determined frequency deviation ΔF and a droop characteristic (27, 28) of the grid-forming component (5) relating on a current power output (PG_{C}) of the one or more generator devices (14), such as the determined (e.g., selected) droop characteristic 27, 28.

Fig. 6 shows two different (e.g., predetermined) droop characteristics 27, 28 (first and second droop characteristics 27, 28) for the grid-forming component 5, 5'. A respective droop characteristic 27, 28 defines the (e.g., linear) dependency of a desired power output PB_{D} of the grid-forming component 5, 5' on the frequency F of the electrical grid 4, 4'. The two droop characteristics 27, 28 shown in Fig. 6 differ from each other by their gradient 29, 30, with the second droop characteristic 28 having a larger gradient (i.e., being steeper) than the first droop characteristic 27. Hence, applying the second droop characteristic 28 for controlling the power output PB of the grid-forming component 5, 5' allows a faster frequency regulation of the grid 4, 4'.

For example, if the current frequency F_{C} of the grid 4, 4' is smaller than the nominal frequency F_{N} of the grid 4, 4' (low-frequency event), the grid-forming component 5, 5' will provide a positive power output PB_{D} for regulating the grid frequency F.

By selecting the steeper droop characteristic 28 (second droop characteristic 28), the energy storage control unit 24 of the grid-forming component 5, 5' will control the energy storage device 6, 6' of the grid-forming component 5, 5' based on a desired power output PB_{D2}, as illustrated in Fig. 6. This will lead to a fast regulation of the grid 4, 4'. Hence, an interference of the frequency regulation of the grid 4, 4' with other functions of the wind power plant 1, 1' (e.g., the active oscillation damping in step S3) can be kept small.

Alternatively, by selecting the less steep droop characteristic 27 (first droop characteristic 27), the energy storage control unit 24 of the grid-forming component 5, 5' will control the energy storage device 6, 6' of the grid-forming component 5, 5' based on a desired power output PB_{D1} which is smaller than PB_{D2}. This will lead to a slower regulation of the grid 4, 4'. Such a slow reaction of the grid-forming component 5, 5' helps to increase the lifetime of the grid-forming component 5, 5', in particular of the energy storage device 6, 6' of the grid-forming component 5, 5' .

Steps S6 and S7 may be carried out only, if it is determined in step S2 that the percentage of the current power output to the rated power output of at least one of the one or more generator devices 14 is above the predetermined threshold Th.

Alternatively, or in addition, steps S6 and S7 may be carried out only, if it is determined in step S5 that the first and second frequency ranges R1, R2 overlap at least partially with each other.

In one embodiment applying to any of the previous embodiments, the wind plant, or wind power plant, includes a plural generator devices 14, such as a plural of wind turbines 2, 2'.

Although the present invention has been described in accordance with preferred embodiments, it is obvious for the person skilled in the art that modifications are possible in all embodiments.

## Claims

1. A method for controlling a wind power plant (1), the wind power plant (1) comprising one or more generator devices (14) and a grid-forming component (5) electrically connected to an output terminal (17) of the one or more generator devices (14), the wind power plant (1) including an electrical grid and/or being electrically connected to an electrical grid (4), and the method comprising:
a) determining (S4) a frequency deviation (ΔF) of a current frequency (F_{C}) of the respective electrical grid (4) from a nominal frequency (F_{N}),
c) controlling (S7) the power flow in the wind power plant (1) and grid-forming component (5) based on the determined frequency deviation (ΔF) and a droop characteristic (27, 28) of the grid-forming component (5) relating on a current power output (PG_{C}) of the one or more generator devices (14).

2. The method according to claim 1, wherein the method includes controlling the power output (PB) of the grid-forming component (5) via the grid-forming component (5) droop characteristic (27, 28) to reduce the frequency deviation (ΔF).

3. The method according to claim 1 or 2, wherein the method includes not to control according to droop characteristics of the generator devices (14), but the droop characteristic (27, 28) of the grid-forming component (5).

4. A method for controlling a wind power plant (1), wherein the method includes two modes,
- a normal mode of operation where at least some of a plural of generator devices (14) are operated according to a generator device droop characteristics individual to the respective generator devices and/or the grid-forming component (5) are used to control the power supplied to an electrical grid, and
- an islanding control mode if the wind power plant (1) is in an islanding or microgrid condition, to a operate according to the grid-forming component (3) droop characteristic (27, 28) according to the method of claim 1, 2 or 3.

5. The method according to any of claims 1-4, wherein the grid-forming component (5) includes an energy storage device (6) .

6. The method according to any of the preceding claims, wherein
the wind power plant (1) comprises one or more wind turbine installations (2) each comprising one of the generator devices (14),
the method comprises receiving a value (V) of a signal that represents a current operating point of the one or more wind turbine installations (2), and
the current power output (PG_{C}) of the one or more generator devices (14) is determined based on the received value (V).

7. The method according to -any of the preceding claims, wherein
the wind power plant (1) comprises one or more wind turbine installations (2) including one or more mechanical structures (10 - 16, 19), and
the method is used for active oscillation damping (S3) of mechanical oscillations of the one or more mechanical structures (10 - 16, 19) of the one or more wind turbine installations (2).

8. The method according to claim 7, wherein the active oscillation damping (S3) includes:
receiving oscillation data (A) of mechanical oscillations of the one or more mechanical structures (10 - 16, 19) of the one or more wind turbine installations (2),
generating a damping control signal (B) based on the received oscillation data (A) for the one or more wind turbine installations (2), and
performing damping control of the one or more generator devices (14) of the one or more wind turbine installations (2) based on the damping control signal (B) causing damping related power output variation at the output terminal (17) of the one or more generator devices (14).

9. The method according to any of the preceding claims, comprising
determining (S2) if a percentage of the current power output (PG_{C}) to a rated power output (PG_{R}) of the one or more generator devices (14) or of at least one of the one or more generator devices (14) is above a predetermined threshold (Th), wherein steps b) and c) are carried out if it is determined that the percentage of the current power output (PG_{C}) to the rated power output (PG_{R}) of the one or more generator devices (14) is above the predetermined threshold (Th) .

10. The method according to claim 9, wherein step b) are carried out if it is determined that the percentage of the current power output (PG_{C}) to the rated power output (PG_{R}) of a given, or predefined, number of generator devices (14) is above the predetermined threshold Th.

11. The method according to claim 10, wherein the given number of generator devices (14) is more than 50%.

12. Method according to any of claims 1-11, wherein the method is used on a wind power plant forming an islanded electrical grid and/or microgrid.

13. A computer program product comprising a program code for executing the method according to one of claims 1 - 12 when run on at least one computer.

14. A wind power plant (1) including an electrical grid and/or being configured for electrical connection with an electrical grid (4), comprising:
one or more generator devices (14),
a grid-forming component (5) electrically connected to an output terminal (17) of the one or more generator devices (14), and
one or more control units (24, 25) configured for
determining a frequency deviation (ΔF) of a current frequency (F_{C}) of the respective electrical grid (4) from a nominal frequency (F_{N}),
and
controlling the power flow in the wind power plant (1) and grid-forming component (5) based on the determined frequency deviation (ΔF) and a droop characteristic (27, 28) of the grid-forming component (5) relating on a current power output (PG_{C}) of the one or more generator devices (14).

15. A wind power plant (1) according to claim 14 and being operated according to the method of any of claims 1-12.
